# FASCICULE DE BREVET EUROPEEN

(11) **EP 2 438 577 B1**
(45) Date de publication et mention de la délivrance du brevet: **08.08.2018**
(21) Numéro de dépôt: 10734207.3
(22) Date de dépôt: 01.06.2010
(51) Int. Cl.: G06F 11/07, G07C 5/08, G07C 5/00

(54) **PROCÉDÉ ET DISPOSITIF DE TRAITEMENT DE PANNES**
VERFAHREN UND VORRICHTUNG ZUR FEHLERVERARBEITUNG
METHOD AND DEVICE FOR PROCESSING FAULTS

(30) Priorité: 02.06.2009 FR 0902641
(43) Date de publication de la demande: 11.04.2012
(73) Titulaire: Airbus Operations, 31060 Toulouse (FR); Airbus, 31700 Blagnac (FR)
(72) Inventeur: GROS, Vincent, F-31170 Tournefeuille (FR); MARTINEZ, Frédéric, F-31820 Pibrac (FR); DEKNEUDT, José, F-31140 Montberon (FR); D'OUINCE, Arnaud, F-31300 Grenade (FR)
(74) Mandataire: Santarelli
(86) Numéro de dépôt international: PCT/FR2010/051067
(87) Numéro de publication internationale: WO 2010/139894

(56) Documents cités:
- EP-A- 1 455 313
- US-A- 5 014 220
- US-A1- 2003 195 675
- US-A1- 2004 111 197
- US-A1- 2006 025 908
- US-A1- 2008 133 178
- US-A1- 2008 312 783

## Description

La présente invention concerne un procédé et un dispositif de traitement de pannes. Elle s'applique, en particulier, au traitement de pannes à bord d'un avion.

Les systèmes de détection de pannes embarqués dans un avion se surveillent entre eux et surveillent également d'autres systèmes avioniques qui leurs fournissent des informations. Au cours de cette surveillance, les systèmes de détection de pannes embarqués envoient des signaux représentatifs de pannes à un système de maintenance central, aussi appelé « CMS » (acronyme de « central maintenance system ») qui crée, pour chaque vol, une liste de toutes ces pannes, liste appelée PFR (acronyme de « Post Flight Report », pour, en français, rapport postérieur au vol).

Les pannes sont associées à une classe, en fonction de leur importance.

Les listes de pannes, ou PFRs, sont exploitées par les compagnies aériennes soit en utilisant AIRMAN (marque déposée), un outil utilisé au sol et recevant en temps réel toutes les pannes envoyées par l'avion, soit directement sur l'avion à la fin du vol en regardant le PFR à l'aide du système de maintenance (CMS) sur les écrans prévus à cet effet dans le cockpit.

Il y a de plus en plus d'électronique dans les avions et donc de plus en plus de pannes et de systèmes de détection de pannes. En moyenne, sur chaque vol, il y a, aujourd'hui, environ 40 pannes rapportées par le système de maintenance. Ce nombre est trop important pour permettre le traitement de toutes ces pannes pendant une escale de l'avion, qui dure parfois moins de deux heures.

US 2004/111197 décrit un système de diagnostic et une méthode d'optimisation de décision de déploiement d'aéronef. Lorsqu'un symptôme d'une panne est détecté, une liste hiérarchisée de composants pouvant être mis en cause est établie à partir de probabilités elles-mêmes basées sur l'expérience de vols précédents. La présente invention vise, pour remédier à ces inconvénients, à extraire ou à mettre en évidence les pannes les plus pertinentes qu'il faudrait réparer en priorité avant que l'avion ne reparte. La réparation des autres pannes serait alors laissée à la discrétion des compagnies aériennes pour être corrigées, si nécessaire, lors d'une escale un peu plus longue ou lors d'une opération de maintenance programmée.

A cet effet, la présente invention vise, selon un premier aspect, un dispositif de traitement de pannes, comportant des moyens de détection et d'identification de pannes, caractérisé en ce qu'il comporte, en outre, pour au moins une partie des pannes identifiées :
- un moyen de mémorisation d'un historique des survenances de pannes ayant la même identification, au cours d'une pluralité de vols,
- un moyen de détermination de l'impact de chaque panne identifiée, sur la disponibilité de l'avion dans une durée prédéterminée,
- un moyen d'association d'un attribut hiérarchique à chaque panne détectée au cours d'un vol, ledit attribut hiérarchique étant fonction dudit historique et dudit impact et
- un moyen d'affichage de pannes identifiées qui sont associées à une partie desdits attributs hiérarchiques.

Ainsi, on peut alerter les personnes chargées de la maintenance de la présence de certaines pannes, parmi l'ensemble des pannes du PFR, qui sont mises en évidence, par exemple par affichage sur un écran, surlignage avec une couleur vive, adjonction d'une étiquette, ou « tag ». De cette manière, la maintenance est optimisée car la compagnie identifie toutes les pannes importantes à traiter pendant l'escale, ce qui lui offre un gain de temps essentiel.

Selon des caractéristiques particulières, le dispositif objet de la présente invention, tel que succinctement exposé ci-dessus comporte en outre, un moyen de détermination du statut, permanent ou intermittent, de chaque panne identifiée, en fonction de l'historique de la panne au cours d'au moins un vol précédent, le moyen d'association d'un attribut hiérarchique à chaque panne détectée au cours d'un vol étant adapté à ce que ledit attribut hiérarchique soit fonction dudit statut.

Grâce à ces dispositions, on peut séparer les pannes intermittentes, de moindre importance, des pannes permanentes et, en conséquence, mieux traiter les secondes.

Selon des caractéristiques particulières, le moyen de détermination du statut, permanent ou intermittent, de chaque panne identifiée, met en oeuvre une classe de chaque panne identifiée.

Selon des caractéristiques particulières, le dispositif objet de la présente invention comporte, en outre, un moyen de réception d'un historique de l'occurrence d'une panne depuis un outil au sol, le moyen de mémorisation d'un historique de l'occurrence de pannes ayant la même identification mémorisant ledit historique.

Grâce à ces dispositions, la consultation de la liste hiérarchisée des pannes peut être effectuée depuis le système de maintenance central de l'avion.

Selon des caractéristiques particulières, le moyen de détermination de l'impact de chaque panne identifiée, sur la disponibilité de l'avion met en oeuvre une classe de chaque panne identifiée.

Selon des caractéristiques particulières, le moyen d'association d'un attribut hiérarchique à chaque panne détectée au cours d'un vol est adapté à ce que ledit attribut hiérarchique soit représentatif de pannes dont l'impact interdit le vol de l'avion et le moyen d'affichage est adapté à afficher lesdites pannes.

Selon des caractéristiques particulières, le moyen d'association d'un attribut hiérarchique à chaque panne détectée au cours d'un vol est adapté à ce que ledit attribut hiérarchique soit représentatif de pannes dont l'impact interdirait le vol de l'avion si leur statut devenait permanent dans une durée prédéterminée.

On traite ainsi séparément les fausses pannes, les pannes dues à des surveillances trop sensibles, les pannes intermittentes ou les pannes liées à des configurations d'avion particulières (par exemple lors de démarrage des moteurs ou de transitoires électriques) ou des conditions de vol particulières.

Selon des caractéristiques particulières, le moyen d'association d'un attribut hiérarchique à chaque panne détectée au cours d'un vol est adapté à ce que ledit attribut hiérarchique soit représentatif de pannes survenue au cours d'au moins un premier nombre prédéterminé de vols, parmi un deuxième nombre prédéterminé de derniers vols effectués par l'avion et le moyen d'affichage est adapté à afficher lesdites pannes.

Selon des caractéristiques particulières, lesdits premier et/ou deuxième nombres prédéterminés sont fonction de l'identification de la panne.

Selon des caractéristiques particulières, le moyen d'association d'un attribut hiérarchique à chaque panne détectée au cours d'un vol est adapté à ce que ledit attribut hiérarchique soit représentatif de pannes susceptibles, en combinaison avec une autre panne non encore survenue, d'interdire le vol de l'avion et le moyen d'affichage est adapté à afficher lesdites pannes.

Selon des caractéristiques particulières, le moyen d'association d'un attribut hiérarchique à chaque panne détectée au cours d'un vol est adapté à ce que ledit attribut hiérarchique soit représentatif de pannes susceptibles d'interdire le vol de l'avion après un nombre prédéterminé d'heures de vol et le moyen d'affichage est adapté à afficher lesdites pannes.

Il existe des pannes associées à un droit de poursuite de vol limité en nombre d'heures de vol. Lorsque ces pannes sont détectées, l'avion a le droit de voler pendant 1000 heures par exemple. Grâce à ces dispositions, on peut afficher une panne avant que l'alarme indiquant que la durée de vol limitée soit atteinte (par exemple à 200 h de la fin de la durée de vol autorisée) et ainsi prévenir la maintenance de l'urgence de réparer cette panne et ainsi éviter de bloquer l'avion au sol.

Selon un deuxième aspect, la présente invention vise un avion, caractérisé en ce qu'il comporte un dispositif objet de la présente invention, tel que succinctement exposé ci-dessus.

Selon un troisième aspect, la présente invention vise un système de traitement de pannes, au sol, caractérisé en ce qu'il comporte un dispositif objet de la présente invention, tel que succinctement exposé ci-dessus.

La présente invention vise, selon un quatrième aspect, un procédé de traitement de pannes détectées et identifiées par des moyens de détection et d'identification, caractérisé en ce qu'il comporte, pour au moins une partie des pannes identifiées :
- une étape de mémorisation d'un historique des survenances de pannes ayant la même identification, au cours d'une pluralité de vols,
- une étape de détermination de l'impact de chaque panne identifiée, sur la disponibilité de l'avion dans une durée prédéterminée,
- une étape d'association d'un attribut hiérarchique à chaque panne détectée au cours d'un vol, ledit attribut hiérarchique étant fonction dudit historique et dudit impact et
- une étape d'affichage de pannes identifiées qui sont associées à une partie desdits attributs hiérarchiques.

Les avantages, buts et caractéristiques particulières de cet avion, de ce système au sol et de ce procédé étant similaires à ceux du dispositif objet de la présente invention, tel que succinctement exposé ci-dessus, ils ne sont pas rappelés ici.

D'autres avantages, buts et caractéristiques particulières de la présente invention ressortiront de la description qui va suivre, faite, dans un but explicatif et nullement limitatif, en regard des dessins annexés, dans lesquels :
- la figure 1 représente, schématiquement, un mode de réalisation particulier d'un dispositif objet de la présente invention dans un avion objet de la présente invention, et des communications avec des équipements au sol ;
- la figure 2 représente, schématiquement, des étapes mises en oeuvre, dans un mode de réalisation particulier du procédé objet de la présente invention.

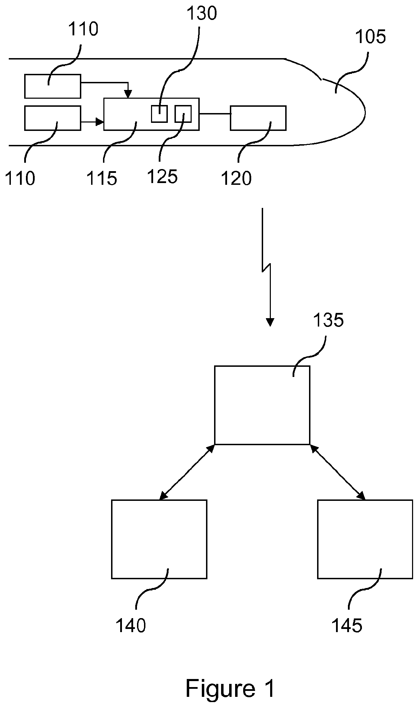

On observe, en figure 1, un avion 105 embarquant des moyens de détection de panne 110, un système de maintenance central 115, aussi appelé « CMS » (acronyme de « central maintenance system ») qui crée, pour chaque vol, une liste de toutes ces pannes, liste appelée PFR (acronyme de « Post Flight Report », pour, en français, rapport postérieur au vol), et un émetteur-récepteur 120 relié au système de maintenance central 115.

Le système de maintenance central 115 comporte une unité centrale 125 et des mémoires non volatiles 130.

Au sol, c'est-à-dire généralement, dans un aéroport, un émetteur-récepteur 135 communique avec l'émetteur récepteur 120 et avec une unité de stockage de données 140 et un outil AIRMAN 145.

L'unité de stockage de données 140 conserve toutes les informations reçues depuis les avions dont il reçoit des données. L'outil AIRMAN 145 permet de déterminer l'historique de l'occurrence d'une panne, de manière connue.

Par ailleurs, le CMS envoie à AIRMAN l'identification de chaque panne, par l'intermédiaire des émetteurs-récepteurs 120 et 135, une information représentative de la survenance de chaque panne, comportant sa classe et de l'impact de chaque panne sur la disponibilité de l'avion sur un horizon de temps donné.

AIRMAN associe chaque panne à son historique et retourne au CMS l'identification de chaque panne avec son statut, permanent ou intermittent, en fonction de la durée de survenance de ladite panne et l'historique de chaque panne identifiée.

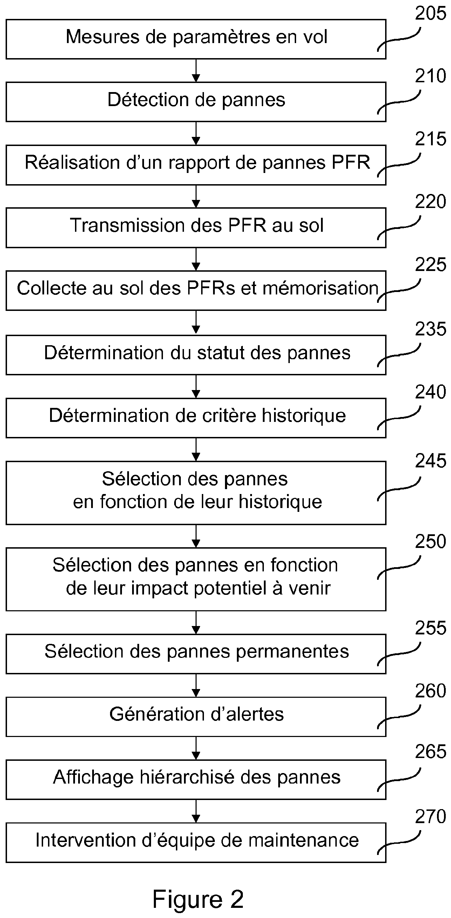

Sur la base de l'identification, y compris la classe, de l'historique, de l'impact et/ou du statut de chaque panne, l'outil au sol AIRMAN détermine un attribut hiérarchique à chaque panne identifiée, comme exposé en regard de la figure 2.

Dans un premier mode de réalisation, embarqué à bord de l'avion, les mémoires non volatiles 130 conservent un programme qui implémente les étapes du procédé objet de la présente invention, par exemple les étapes illustrées en figure 2 et l'unité centrale 125 met en oeuvre les instructions de ce programme. Les mémoires 130 et l'unité centrale 125 du système de maintenance central 115 constituent ainsi conjointement :
- un moyen de mémorisation d'un historique des survenances de pannes ayant la même identification, au cours d'une pluralité de vols,
- un moyen de détermination de l'impact de chaque panne identifiée, sur la disponibilité de l'avion dans une durée (à venir) prédéterminée,
- un moyen d'association d'un attribut hiérarchique à chaque panne détectée au cours d'un vol, ledit attribut hiérarchique étant fonction dudit historique et dudit impact et
- un moyen d'affichage de pannes identifiées qui sont associées à une partie desdits attributs hiérarchiques.

Dans un deuxième mode de réalisation, au sol, l'outil AIRMAN conserve un programme qui implémente les étapes du procédé objet de la présente invention, par exemple les étapes illustrées en figure 2 et met en oeuvre les instructions de ce programme. L'outil AIRMAN constitue ainsi:
- un moyen de mémorisation d'un historique des survenances de pannes ayant la même identification, au cours d'une pluralité de vols,
- un moyen de détermination de l'impact de chaque panne identifiée, sur la disponibilité de l'avion dans une durée (à venir) prédéterminée,
- un moyen d'association d'un attribut hiérarchique à chaque panne détectée au cours d'un vol, ledit attribut hiérarchique étant fonction dudit historique et dudit impact et
- un moyen d'affichage de pannes identifiées qui sont associées à une partie desdits attributs hiérarchiques.

Lors de l'affichage de la liste des pannes, au cours d'une escale ou à la demande d'un membre d'équipage, la liste des pannes représente l'attribut hiérarchique associé aux pannes affichées. Par exemple, seules sont affichées les pannes associées à un attribut hiérarchique supérieur à une valeur prédéterminée. Selon un autre exemple, seul un nombre prédéterminé de pannes est affiché, selon un ordre d'attribut hiérarchique décroissant.

De cette manière, la maintenance effectuée lors de l'escale est optimisée car la compagnie aérienne qui exploite l'avion identifie toutes les pannes importantes à traiter pendant l'escale ce qui lui offre un gain de temps essentiel par rapport aux PFR de l'art antérieur.

En d'autres termes, la mise en oeuvre de la présente invention permet, par exemple, d'extraire des PFR les pannes importantes (selon leur classe), qui ont un statut permanent et qui peuvent bloquer l'avion au sol immédiatement ou les pannes qui pourraient, dans quelques heures de vol, bloquer l'avion en ajoutant la contrainte que ces pannes soient présentes depuis plusieurs vols successifs. Cet algorithme permet ainsi de traiter à part les pannes susceptibles d'être des fausses pannes, des pannes dues à des surveillances trop sensibles, des pannes intermittentes ou des pannes liées à des configurations de l'avion particulières ou des conditions de vol particulières.

La figure 2 détaille des étapes effectuées dans un mode de réalisation particulier du procédé objet de la présente invention.

Au cours d'une étape 205, les différents capteurs de l'avion mesurent des paramètres qui sont centralisés dans des calculateurs embarqués (non représentés). Au cours d'une étape 210, ces calculateurs embarqués stockent les valeurs de ces paramètres, les traitent, par exemple par comparaison à certaines valeurs limites et détectent, par traitement, des pannes. On note ici que le terme de « panne » recouvre aussi les anomalies de fonctionnement.

Les quatre types de pannes suivants, valables pour certains avions commerciaux sont ainsi identifiés.

Le premier type de panne concerne les pannes dites « avec effet cockpit », qui sont les pannes générant un effet perceptible par le pilote dans le cockpit : par exemple un message ECAM (acronyme de « Electronic Centralised Aircraft Monitor » pour, en français, surveillance d'avion électronique centralisée) d'un calculateur qui contrôle les fonctions avion. Le message ECAM peut représenter trois types d'alarme (warning, caution, recommandation/advisory), une alarme locale, un son ou un paramètre manquant (« XX ») sur un des écrans du cockpit. Ces pannes sont souvent dites de « classe 1 » ou également « cockpit item ».

Le deuxième type de pannes concerne les pannes dites « avec effet cabine ». Il s'agit de toute panne générant un effet dans la cabine de l'avion mais n'ayant pas de conséquence sur la sécurité, mais uniquement sur le confort des passagers (par exemple, toilettes en pannes). Ces pannes sont souvent dites de « classe 3 » ou « cabin item ».

Le troisième type de pannes concerne les pannes qui ne présentent aucun effet immédiat mais peuvent avoir un effet à plus long terme :
- toute panne n'ayant ni effet cockpit ni effet cabine mais devant être réparée dans un délai imparti pour des raisons de sécurité. Ces pannes sont souvent dites de « classe 4 » (par exemple, liée à un faible niveau d'huile moteur).
- toute panne n'ayant ni effet cockpit ni effet cabine, sans conséquence sur la sécurité, sans limitation de temps, mais pouvant générer un effet cockpit ou un effet cabine si elle est combinée avec une ou plusieurs autres pannes (par exemple, la perte de redondance d'un commutateur (« switch ») du réseau AFDX (acronyme de « Avionics Full DupleX » pour, en français, avionique en duplex intégral). Ces pannes sont souvent dites de « classe 5 » ou « pending items ».

La quatrième type de pannes concerne les pannes sans effet direct mais pouvant influencer les performances de l'avion, ou pannes dites « mineures ». Il s'agit de toute panne n'ayant ni effet cockpit ni effet cabine, sans conséquence sur la sécurité, sans limitation de temps, mais ayant des conséquences sur les performances de l'avion, notamment des conséquences en termes de coût d'exploitation. Ces pannes sont souvent dites de « classe 6 » ou « Minor item ».

Au cours d'une étape 215, un rapport PFR, reprenant la liste des pannes détectées, est réalisé par le calculateur (ou unité centrale) du système de maintenance centralisée CMS. Au cours d'une étape 220, les rapports PFR de pannes sont transmis au sol pendant le vol et après. On note que certaines pannes sont également présentées au pilote, par exemple des alarmes émises par le FWS (acronyme de « Flight Warning System » ou système d'alarme de vol).

Au cours d'une étape 225, l'outil AIRMAN collecte les rapports PFR reçus en vol et au sol depuis l'avion et les met en mémoire.

Conformément à la présente invention, au cours d'une étape 235, on identifie l'ensemble des pannes et on les met en évidence suivant leur historique d'apparition, leur impact sur la disponibilité de l'avion dans un intervalle de temps (à venir) prédéterminé.

A cet effet, au cours de l'étape 235, on met en oeuvre un historique propre à l'avion dans lequel sont répertoriées toutes les pannes étant survenues sur les vols précédents. Lorsqu'une panne donnée identifiée par son code réapparaît, l'outil l'enregistre à nouveau avec son code en association avec le numéro du vol ainsi que sa date.

Au cours de l'étape 235, on détermine pour chaque panne, son statut, permanent ou intermittent en fonction de l'historique des pannes, pour au moins un vol antérieur.

Au cours d'une étape 240, on recherche l'ensemble des pannes ayant apparu sur les x derniers vols, x étant un nombre prédéterminé. Ce critère est appelé critère d'historique d'apparition sur les x derniers vols. L'outil garde en mémoire les pannes des vols précédents et incrémente de un à chaque vol sur lequel la panne est présente.

Au cours d'une étape 245, on sélectionne les pannes en fonction d'un critère portant sur son historique. Par exemple, si le compteur indique un nombre de pannes équivalent au nombre x de vols, cette panne est sélectionnée. De la même façon, on peut rechercher le nombre de pannes présentes sur x vols parmi les y derniers, y étant un nombre prédéterminé supérieur ou égal à x.

Au cours d'une étape 250, on sélectionne les pannes pouvant bloquer l'avion dans un horizon de temps donné (même immédiatement).

Au cours d'une étape 255, on sélectionne les pannes qui un statut considéré comme permanent (pour les distinguer des pannes considérées comme intermittentes).

Pour la mise en oeuvre pratique des étapes 250 et 255, on utilise des informations provenant directement du système de maintenance de l'avion et à partir de la classe de chaque message de panne (1, 3, 5, 6) ainsi qu'une corrélation faite par le système de maintenance avec les effets cockpits générés (Warning, Caution, ...). Cette corrélation se fait de façon essentiellement temporelle.

Plus généralement, les pannes sont sélectionnées en fonction de l'ensemble des critères indiqués ci-dessus ou de toute combinaison ou juxtaposition de ces critères. On entend par « combinaison » le fait de ne retenir que les pannes qui répondent à deux ou trois des critères des étapes 245 à 255 et par « juxtaposition » de ne retenir que les pannes qui répondent à l'un ou à l'autre des critères.

Lorsqu'une panne répond à la formulation des critères retenus, au cours d'une étape 260, on génère une alerte. Selon une forme de réalisation, on met en évidence les seules pannes sélectionnées dans la liste des pannes survenues au cours du vol.

L'équipe de maintenance sait ainsi que chaque panne affichée ou mise en évidence est une vraie panne à traiter. L'équipe de maintenance peut donc établir son plan d'intervention plus rapidement.

En variante, au cours des étapes 245 à 255, on sélectionne les pannes suivantes :
- parmi les « cockpit items », les pannes qui sont liées à une alarme ou celles qui sont survenues au cours des cinq derniers vols ;
- parmi les « cabin items », les pannes qui sont survenues au cours des cinq derniers vols ;
- parmi les « pending items », les pannes qui vont générer une alarme dans moins de 200 heures de vol ou celles qui, si elles sont combinées à une autre panne, déclencheront une alarme, et qui sont survenues au cours des cinq derniers vols et
- parmi les « minor items », celles qui sont survenues au cours les dix derniers vols.

On donne, ci-dessous, un complément d'explication sur les « pending items » :
- il existe des pannes associées à un « timer » (horloge de mesure de durée de vol). Lorsque ces pannes sont détectées, l'avion a le droit de voler pendant une durée prédéterminée, par exemple 1000 heures. Le « timer » se décompte au fil des heures de vol effectuées par l'avion. Lorsque le « timer » arrive à « 0 », une alarme « Maintenance Time Limited » est émise à l'ECAM (acronyme de « Electronic Centralised Aircraft Monitoring » pour surveillance électronique d'avion centralisée) en cockpit et l'équipage est ainsi averti qu'il ne peut plus voler tant que cette panne ne sera pas réparée (sauf sous MEL, acronyme de « Minimum Equipment List » ou liste d'équipement minimum). La variante proposée ici peut donc mettre en évidence la panne avant que l'alarme n'apparaisse (par exemple, lorsque le timer représente 200 heures) et, ainsi, prévenir la maintenance de l'urgence de réparer cette panne et ainsi éviter de bloquer l'avion au sol.
- il existe également des pannes qui ne déclenchent une alarme que si une autre panne identifiée survient simultanément. Dans ce cas, tant qu'il n'y a qu'une panne, l'équipage ne voit aucun effet sur son avion. Par contre l'avion devient un peu plus exposé à une alarme qui pourrait bloquer l'avion. On prévoit, en mettant en oeuvre des variantes de l'invention, de réparer la première panne dans un laps de temps raisonnable de manière à diminuer le risque d'avoir les deux pannes simultanément et de bloquer l'avion à cause de l'alarme qui en résulterait.

Dans le cas d'un accès au PFR depuis l'outil AIRMAN, au cours d'une étape 265, cet outil affiche, dans un écran dédié à l'avion, l'identification de l'avion concerné et la date de réception des informations affichées. Un onglet spécifique permet d'afficher le PFR hiérarchisé, c'est-à-dire dans lequel les pannes sélectionnées sont mises en évidence en fonction de leur attribut hiérarchique.

Dans le cas d'un accès au PFR depuis le CMS, les mêmes données sont mises à disposition de l'équipage ou de l'équipe de maintenance.

Au cours d'une étape 270, les équipes de maintenance interviennent sur l'avion après son atterrissage ou en cours du vol, pour préparer les actions de maintenance à mener au sol, une fois l'avion arrivé à destination, en mettant en oeuvre l'onglet spécifique de l'outil au sol décrit en regard de l'étape 265.

Comme on le comprend à la lecture de la description qui précède, la mise en oeuvre de la présente invention alerte les personnes chargées de la maintenance de la présence de certaines pannes. Ainsi certaines pannes sont mises en évidence (affichées sur écran, surlignées par une couleur vive, par ajout d'un tag, ou étiquette, ...) parmi l'ensemble des pannes du PFR. Ces pannes sont considérées par le constructeur ou l'exploitant de l'avion comme des pannes importantes et qui devraient être traitées par l'équipe de maintenance au moment d'une escale. Ceci ne peut être qu'une aide car la politique des compagnies aériennes en matière de maintenance est très variée. En effet pour certaines compagnies, il faut corriger uniquement les pannes interdisant le vol de l'avion à l'escale, alors que pour d'autres, les pannes importantes pour le confort des passagers s'y ajoutent et, pour d'autres encore, le plus de pannes possible doit être traité.

## Revendications

1. Dispositif de traitement de pannes(110), comportant des moyens de détection et d'identification de pannes, **caractérisé en ce qu'**il comporte, en outre, pour au moins une partie des pannes identifiées :
- un moyen de mémorisation (140) d'un historique des survenances de pannes ayant la même identification, au cours d'une pluralité de vols,
- un moyen de détermination de l'impact de chaque panne identifiée, sur la disponibilité de l'avion dans une durée prédéterminée,
- un moyen d'association d'un attribut hiérarchique à chaque panne détectée au cours d'un vol, ledit attribut hiérarchique étant fonction dudit historique et dudit impact et
- un moyen d'affichage de pannes identifiées qui sont associées à une partie desdits attributs hiérarchiques.

2. Dispositif selon la revendication 1, **caractérisé en ce qu'**il comporte, en outre, un moyen de détermination du statut, permanent ou intermittent, de chaque panne identifiée, en fonction de l'historique de la panne au cours d'au moins un vol précédent, le moyen d'association d'un attribut hiérarchique à chaque panne détectée au cours d'un vol étant adapté à ce que ledit attribut hiérarchique soit fonction dudit statut.

3. Dispositif selon la revendication 2, **caractérisé en ce que** le moyen de détermination du statut, permanent ou intermittent, de chaque panne identifiée, met en oeuvre la classe de chaque message de panne identifiée.

4. Dispositif selon l'une quelconque des revendications 1 à 3, **caractérisé en ce qu'**il comporte, en outre, un moyen de réception d'un historique de l'occurrence d'une panne depuis un outil au sol, le moyen de mémorisation d'un historique de l'occurrence de pannes ayant la même identification mémorisant ledit historique.

5. Dispositif selon l'une quelconque des revendications 1 à 4, **caractérisé en ce que** le moyen de détermination de l'impact de chaque panne identifiée sur la disponibilité de l'avion met en oeuvre une classe de chaque panne identifiée.

6. Dispositif selon l'une quelconque des revendications 1 à 5, **caractérisé en ce que** le moyen d'association d'un attribut hiérarchique à chaque panne détectée au cours d'un vol est adapté à ce que ledit attribut hiérarchique soit représentatif de pannes dont l'impact interdit le vol de l'avion et le moyen d'affichage est adapté à afficher lesdites pannes.

7. Dispositif selon l'une quelconque des revendications 1 à 6, **caractérisé en ce que** le moyen d'association d'un attribut hiérarchique à chaque panne détectée au cours d'un vol est adapté à ce que ledit attribut hiérarchique soit représentatif de pannes dont l'impact interdirait le vol de l'avion si leur statut devenait permanent dans une durée prédéterminée.

8. Dispositif selon l'une quelconque des revendications 1 à 7, **caractérisé en ce que** le moyen d'association d'un attribut hiérarchique à chaque panne détectée au cours d'un vol est adapté à ce que ledit attribut hiérarchique soit représentatif de pannes survenue au cours d'au moins un premier nombre prédéterminé de vols, parmi un deuxième nombre prédéterminé de derniers vols effectués par l'avion et le moyen d'affichage est adapté à afficher lesdites pannes.

9. Dispositif selon la revendication 8, **caractérisé en ce que** lesdits premier et/ou deuxième nombres prédéterminés sont fonction de l'identification de la panne.

10. Dispositif selon l'une quelconque des revendications 1 à 9, **caractérisé en ce que** le moyen d'association d'un attribut hiérarchique à chaque panne détectée au cours d'un vol est adapté à ce que ledit attribut hiérarchique soit représentatif de pannes susceptibles, en combinaison avec une autre panne non encore survenue, d'interdire le vol de l'avion et le moyen d'affichage est adapté à afficher lesdites pannes.

11. Dispositif selon l'une quelconque des revendications 1 à 3, **caractérisé en ce que** le moyen d'association d'un attribut hiérarchique à chaque panne détectée au cours d'un vol est adapté à ce que ledit attribut hiérarchique soit représentatif de pannes susceptibles d'interdire le vol de l'avion après une nombre prédéterminé d'heures de vol et le moyen d'affichage est adapté à afficher lesdites pannes.

12. Avion, **caractérisé en ce qu'**il comporte un dispositif selon l'une quelconque des revendications 1 à 11.

13. Système de traitement de pannes au sol, **caractérisé en ce qu'**il comporte un dispositif selon l'une quelconque des revendications 1 à 11.

14. Procédé de traitement de pannes détectées et identifiées par des moyens de détection et d'identification, **caractérisé en ce qu'**il comporte, pour au moins une partie des pannes identifiées :
- une étape de mémorisation d'un historique des survenances de pannes ayant la même identification, au cours d'une pluralité de vols(225),
- une étape de détermination de l'impact de chaque panne identifiée, sur la disponibilité de l'avion dans une durée prédéterminée(250),
- une étape d'association d'un attribut hiérarchique à chaque panne détectée au cours d'un vol, ledit attribut hiérarchique étant fonction dudit historique et dudit impact (255) et
- une étape d'affichage de pannes identifiées qui sont associées à une partie desdits attributs hiérarchiques.

## Patentansprüche

1. Vorrichtung zur Fehlerverarbeitung (110), umfassend Mittel zum Erkennen und Identifizieren von Fehlern, **dadurch gekennzeichnet, dass** sie ferner für mindestens einen Teil der identifizierten Fehler aufweist:
- ein Mittel zum Speichern (140) einer Historie der Fehlerereignisse mit der gleichen Kennung während mehrerer Flüge,
- ein Mittel zum Bestimmen der Auswirkung jedes identifizierten Fehlers auf die Verfügbarkeit des Flugzeugs in einer vorbestimmten Zeitdauer,
- ein Mittel zum Zuordnen eines hierarchischen Attributs zu jedem Fehler, der während eines Fluges erkannt wird, wobei das hierarchische Attribut eine Funktion der Historie und der Auswirkung ist, und
- ein Mittel zum Anzeigen von identifizierten Fehlern, die einem Teil der hierarchischen Attribute zugeordnet sind.

2. Vorrichtung nach Anspruch 1, **dadurch gekennzeichnet, dass** sie ferner ein Mittel zum Bestimmen des permanenten oder intermittierenden Status jedes identifizierten Fehlers in Abhängigkeit von der Historie des Fehlers während mindestens eines vorherigen Fluges aufweist, wobei das Mittel zum Zuordnen eines hierarchischen Attributs zu jedem Fehler, der während eines Fluges erkannt wird, geeignet ist, dass das hierarchische Attribut eine Funktion des Status ist.

3. Vorrichtung nach Anspruch 2, **dadurch gekennzeichnet, dass** das Mittel zum Bestimmen des permanenten oder intermittierenden Status jedes identifizierten Fehlers die Klasse von jeder Meldung eines identifizierten Fehlers umsetzt.

4. Vorrichtung nach einem der Ansprüche 1 bis 3, **dadurch gekennzeichnet, dass** sie ferner ein Mittel zum Empfangen einer Historie des Auftretens eines Fehlers von einem Instrument am Boden aufweist, wobei das Mittel zum Speichern einer Historie des Auftretens von Fehlern die gleiche Identifikation aufweist, die die Historie speichert.

5. Vorrichtung nach einem der Ansprüche 1 bis 4, **dadurch gekennzeichnet, dass** das Mittel zum Bestimmen der Auswirkung von jedem identifizierten Fehler auf die Verfügbarkeit des Flugzeugs eine Klasse von jedem identifizierten Fehler umsetzt.

6. Vorrichtung nach einem der Ansprüche 1 bis 5, **dadurch gekennzeichnet, dass** das Mittel zum Zuordnen eines hierarchischen Attributs zu jedem Fehler, der während eines Fluges erkannt wird, geeignet ist, dass das hierarchische Attribut für Fehler repräsentativ ist, deren Auswirkung den Flug des Flugzeugs verbietet, und das Mittel zum Anzeigen geeignet ist, die Fehler anzuzeigen.

7. Vorrichtung nach einem der Ansprüche 1 bis 6, **dadurch gekennzeichnet, dass** das Mittel zum Zuordnen eines hierarchischen Attributs zu jedem Fehler, der während eines Fluges erkannt wird, geeignet ist, dass das hierarchische Attribut für Fehler repräsentativ ist, deren Auswirkung den Flug des Flugzeugs verbieten würde, wenn ihr Status in einer vorbestimmten Zeitdauer permanent werden würde.

8. Vorrichtung nach einem der Ansprüche 1 bis 7, **dadurch gekennzeichnet, dass** das Mittel zum Zuordnen eines hierarchischen Attributs zu jedem Fehler, der während eines Fluges erkannt wird, geeignet ist, dass das hierarchische Attribut für Fehler repräsentativ ist, die während mindestens einer ersten vorbestimmten Anzahl an Flügen unter einer zweiten vorbestimmten Anzahl an letzten Flügen, die von dem Flugzeug ausgeführt werden, aufgetreten sind, und das Mittel zum Anzeigen geeignet ist, die Fehler anzuzeigen.

9. Vorrichtung nach Anspruch 8, **dadurch gekennzeichnet, dass** die erste und/oder zweite vorbestimmte Anzahl Funktion der Identifizierung des Fehlers ist/sind.

10. Vorrichtung nach einem der Ansprüche 1 bis 9, **dadurch gekennzeichnet, dass** das Mittel zum Zuordnen eines hierarchischen Attributs zu jedem Fehler, der während eines Fluges erkannt wird, geeignet ist, dass das hierarchische Attribut für Fehler repräsentativ ist, die in Kombination mit einem anderen noch nicht eingetretenen Fehler den Flug des Flugzeugs verbieten können, und das Mittel zum Anzeigen geeignet ist, die Fehler anzuzeigen.

11. Vorrichtung nach einem der Ansprüche 1 bis 3, **dadurch gekennzeichnet, dass** das Mittel zum Zuordnen eines hierarchischen Attributs zu jedem Fehler, der während eines Fluges erkannt wird, geeignet ist, dass das hierarchische Attribut für Fehler repräsentativ ist, die den Flug des Flugzeugs nach einer vorbestimmten Anzahl an Flugstunden verbieten können, und das Mittel zum Anzeigen geeignet ist, die Fehler anzuzeigen.

12. Flugzeug, **dadurch gekennzeichnet, dass** es eine Vorrichtung nach einem der Ansprüche 1 und 11 aufweist.

13. System zur Fehlerverarbeitung am Boden, **dadurch gekennzeichnet, dass** es eine Vorrichtung nach einem der Ansprüche 1 und 11 aufweist.

14. Verfahren zur Verarbeitung von Fehlern, die durch die Mittel zum Erkennen und Identifizieren erkannt und identifiziert werden, **dadurch gekennzeichnet, dass** es für mindestens einen Teil der identifizierten Fehler aufweist:
- einen Schritt des Speicherns einer Historie der Fehlerereignisse mit der gleichen Kennung während mehrerer Flüge (225),
- einen Schritt des Bestimmens der Auswirkung jedes identifizierten Fehlers auf die Verfügbarkeit des Flugzeugs in einer vorbestimmten Zeitdauer (250),
- einen Schritt des Zuordnens eines hierarchischen Attributs zu jedem Fehler, der während eines Fluges erkannt wird, wobei das hierarchische Attribut Funktion der Historie und der Auswirkung (255) ist, und
- einen Schritt des Anzeigens von identifizierten Fehlern, die einem Teil der hierarchischen Attribute zugeordnet werden.

## Claims

1. Device (110) for processing faults, including means for detecting and for identifying faults, **characterised in that** it furthermore includes, for at least some of the identified faults:
- a means (140) for storing a log of the occurrences of faults having the same identification, over the course of a plurality of flights,
- a means for determining the impact of each identified fault on the availability of the aircraft in a predetermined period,
- a means for associating a hierarchical attribute with each fault detected over the course of a flight, said hierarchical attribute depending on said log and on said impact, and
- a means for displaying identified faults that are associated with some of said hierarchical attributes.

2. Device according to claim 1, **characterised in that** it furthermore includes a means for determining the status, continuous or intermittent, of each identified fault on the basis of the fault log over the course of at least one preceding flight, the means for associating a hierarchical attribute with each fault detected over the course of a flight being designed such that said hierarchical attribute depends on said status.

3. Device according to claim 2, **characterised in that** the means for determining the status, continuous or intermittent, of each identified fault uses the class of each identified fault message.

4. Device according to any one of claims 1 to 3, **characterised in that** it furthermore includes a means for receiving a log of the occurrence of a fault from a tool on the ground, the means for storing a log of the occurrence of faults having the same identification storing said log.

5. Device according to any one of claims 1 to 4, **characterised in that** the means for determining the impact of each identified fault on the availability of the aircraft uses a class of each identified fault.

6. Device according to any one of claims 1 to 5, **characterised in that** the means for associating a hierarchical attribute with each fault detected over the course of a flight is designed such that said hierarchical attribute is representative of faults whose impact prevents the aircraft from flying and the display means is designed to display said faults.

7. Device according to any one of claims 1 to 6, **characterised in that** the means for associating a hierarchical attribute with each fault detected over the course of a flight is designed such that said hierarchical attribute is representative of faults whose impact would prevent the aircraft from flying if their status were to become continuous in a predetermined period.

8. Device according to any one of claims 1 to 7, **characterised in that** the means for associating a hierarchical attribute with each fault detected over the course of a flight is designed such that said hierarchical attribute is representative of faults that have occurred over the course of at least a first predetermined number of flights from among a second predetermined number of previous flights performed by the aircraft and the display means is designed to display said faults.

9. Device according to claim 8, **characterised in that** said first and/or second predetermined numbers depend on the identification of the fault.

10. Device according to any one of claims 1 to 9, **characterised in that** the means for associating a hierarchical attribute with each fault detected over the course of a flight is designed such that said hierarchical attribute is representative of faults that are liable, in combination with another fault that has not yet occurred, to prevent the aircraft from flying and the display means is designed to display said faults.

11. Device according to any one of claims 1 to 3, **characterised in that** the means for associating a hierarchical attribute with each fault detected over the course of a flight is designed such that said hierarchical attribute is representative of faults that are liable to prevent the aircraft from flying after a predetermined number of flying hours and the display means is designed to display said faults.

12. Aircraft, **characterised in that** it includes a device according to any one of claims 1 to 11.

13. System for processing faults on the ground, **characterised in that** it includes a device according to any one of claims 1 to 11.

14. Method for processing faults detected and identified by detection and identification means, **characterised in that** it includes, for at least some of the identified faults:
- a step (225) of storing a log of the occurrences of faults having the same identification, over the course of a plurality of flights,
- a step (250) of determining the impact of each identified fault on the availability of the aircraft in a predetermined period,
- a step (255) of associating a hierarchical attribute with each fault detected over the course of a flight, said hierarchical attribute depending on said log and on said impact, and
- a step of displaying identified faults that are associated with some of said hierarchical attributes.
